# EUROPÄISCHE PATENTSCHRIFT

(11) **EP 4 566 834 B1**
(45) Veröffentlichungstag und Bekanntmachung des Hinweises auf die Patenterteilung: **18.03.2026**
(21) Anmeldenummer: 24179816.4
(22) Anmeldetag: 04.06.2024
(51) Int. Cl.: B60B 35/00, B60B 37/00, B60B 35/02, B60B 37/10, A61H 3/04, B60B 33/00

(54) **STECKBARE RADANORDNUNG**
PLUG-IN WHEEL ASSEMBLY
ENSEMBLE ROUE ENFICHABLE

(30) Priorität: 05.12.2023 DE 102023133919
(43) Veröffentlichungstag der Anmeldung: 11.06.2025
(73) Patentinhaber: Beger, Udo, 84034 Landshut (DE)
(72) Erfinder: Beger, Udo, 84034 Landshut (DE)
(74) Vertreter: Pröll, Jürgen

(56) Entgegenhaltungen:
- EP-A2- 4 438 322
- US-A1- 2017 189 258
- US-B1- 7 866 677

## Beschreibung

Die vorliegende Erfindung betrifft eine steckbare Radanordnung, vorzugsweise zum Einsatz bei einem Rollator, mit den Merkmalen des Patentanspruches 1. Bei der Verwendung der Erfindung bei einem Rollator sind die einzelnen Räder umsteckbar, sodass die Spurbreite des Rollators veränderbar ist. Hierdurch lassen sich die Fahreigenschaften entsprechend der Umgebung, in welcher der Rollator eingesetzt werden soll, anpassen.

### Hintergrund

Der Einsatz von Gehhilfen in Form von Rollatoren soll Menschen beim Gehen unterstützen, denen das Laufen ohne Gehhilfe sonst schwerfallen würde. Sie bieten diesen Menschen einen sicheren Halt und können gleichzeitig beim Gehen vor sich hergeschoben werden. Dabei ist ein besonders sicherer Stand der Rollatoren stets unbedingt erforderlich, da andernfalls Stürze mit auch schweren Verletzungen die Folge sein können. Besonders im Freien und bei unebenem Gelände muss ein sicherer Stand gewährleistet sein. Hierzu wird oftmals eine breite Spurweite gewählt, die ein seitliches Umkippen verhindert. Ist man jedoch in einer sehr ebenen Umgebung unterwegs, wie sie in Innenräumen vorzufinden ist, so kann ein Rollator schmaler ausgebildet werden, da dieser nicht »geländegängig« dimensioniert sein muss, um sicher bewegt werden zu können.

### Stand der Technik

Es gibt Rollatoren, die nur für Innenräume geeignet sind und dementsprechend eine schmalere Spurweite aufweisen als Rollatoren, die für draußen geeignet sind. Solche Rollatoren werden auch Indoor-Rollatoren genannt. Rollatoren für Innenräume sind nur für sehr ebene Umgebungen sicher. Die Breite ist hierbei so dimensioniert, dass die Rollatoren gut durch Innenräume bewegt werden können, ohne an Hindernisse wie Türen, Möbel und Wände zu stoßen. Eine schmale Bauweise hat hierbei den Vorteil, dass solche Rollatoren auch sehr wendig sind und durch schmale Lücken hindurchgeschoben werden können. Nachteilig ist jedoch, dass hierbei auch immer eine schmale Griffbreite einhergeht, die wiederum den Halt einer Person reduziert. Außerdem ist die Kippsicherheit durch die schmale Bauweise verringert. Für einen Einsatz draußen sind solche Indoor-Rollatoren gänzlich ungeeignet und stellen für den Benutzer ein erhebliches Sturzrisiko dar.

Um sich draußen bei unebener Umgebung bewegen zu können, gibt es Rollatoren, die speziell für solche Bedingungen geschaffen sind, indem sie eine breitere Spurweite aufweisen als Rollatoren für Innenräume. Solche Rollatoren werden auch Outdoor-Rollatoren genannt. Durch die breitere Spurweite sind der Stand und dadurch auch der Halt stabiler. Sie weisen gegenüber Indoor-Rollatoren eine höhere Kippsicherheit auf. Auch kann so die Griffbreite entsprechend breiter gewählt werden, sodass sich Personen besser daran festhalten können. Nachteilig ist jedoch hierbei, dass auch das Handling und die Wendigkeit durch die breitere Bauweise verringert ist. Solche Rollatoren sind für den Gebrauch in Innenräumen gänzlich ungeeignet. Man würde schwerer durch Türen kommen und öfter an Hindernissen anstoßen, da Outdoor-Rollatoren breiter ausgebildet sind als Indoor-Rollatoren, da zumeist die Hinterräder bei Outdoor-Rollatoren außen angeordnet sind.

Sind Personen auf Rollatoren angewiesen und möchten sowohl drinnen in Innenräumen als auch draußen im Freien einen Sind Personen auf Rollatoren angewiesen und möchten sowohl drinnen in Innenräumen als auch draußen im Freien einen Rollator verwenden, so kommen sie nicht umhin, jeweils einen Rollator für draußen und einen Rollator für drinnen zu verwenden. Dies kostet zum einen Platz für die Rollatoren und zum anderen sind Rollatoren auch teuer in der Anschaffung. Darüber hinaus zahlt die gesetzliche Krankenkasse lediglich den günstigsten geeigneten Rollator oder aber auch nur einen Teil eines Rollators, sodass eine kostenintensive Zuzahlung erforderlich ist.

Bei einer Erweiterung des betrachteten Stands der Technik im Hinblick auf Radanordnungen sind die im Folgenden aufgeführten Patentschriften zu nennen.

Aus der DE 1 865 003 U ist ein Kinderwagenrad mit Achsstummel und Kotschützer als abnehmbare Einheit offenbart. Dabei wird das Rad mithilfe einer beweglichen Nietverbindung und einem U-förmig gebogenen Flacheisen am Traggestell des Kinderwagens montiert.

Aus der DE 10 2016 118 032 A1 sind eine Antriebseinheit und ein Rollstuhl mit Antriebseinheit bekannt, wobei die Montage des großen Rollstuhlrades an eine Antriebseinheit und damit an den Rollstuhl selbst aufgezeigt ist. Dabei wird eine Welle-Nabe-Verbindung genutzt, um die Ausgangswelle der Antriebseinheit mit der Antriebsachse des montierten Rades zu verbinden.

In DE 20 308 860 U1 ist eine Montage einer Radeinheit eines Kinderwagens bekannt. Bei diesem Kinderwagen soll es möglich sein mittels der Vorderräder eine Lenkbewegungen zu möglichen. Dabei wird eine Radeinheit, bestehend aus einem Rad und einer an das Rad gekoppelten Radachse, in eine Radsitzeinheit montiert.

EP 4 438 322 A2 offenbart eine steckbare Radanordnung, die wenigstens ein Profilrohr, wenigstens eine Steckachse, wenigstens ein Rad, welches mit der wenigstens einen Steckachse verbindbar ist, sowie wenigstens einen Haltebügel aufweist. Der wenigstens eine Haltebügel ermöglicht es, die wenigstens eine Steckachse an dem wenigstens einen Profilrohr von jeder Seite des wenigstens einen Profilrohrs zu arretieren. Dabei weisen der wenigstens eine Haltebügel und das wenigstens eine Profilrohr jeweils wenigstens eine Bohrung auf, durch die die wenigstens eine Steckachse durchsteckbar ist.

### Aufgabe

Es ist die Aufgabe der vorliegenden Erfindung eine steckbare Radanordnung, beispielsweise für einen Rollator bereitzustellen, die es beispielsweise bei einem Rollator erlaubt die Spurbreite zu vergrößern oder zu verringern bzw. zu verkleinern, indem die Räder beidseitig an einer Profilleiste des Rollators montierbar, insbesondere einsteckbar, sind.

### Lösung

Diese Aufgabe wird durch die in Patentanspruch 1 angegebenen Merkmale gelöst.

Es ist eine steckbare Radanordnung vorgesehen. Die steckbare Radanordnung weist wenigstens ein Rad, wenigstens eine Profilleiste, wenigstens eine Steckachse, wenigstens eine Arretiereinheit, wenigstens eine Aufnahme und wenigstens einen Anschlag auf, wobei das wenigstens eine Rad mit der wenigstens einen Steckachse verbindbar ausgebildet ist, wobei die wenigstens eine Arretiereinheit und der wenigstens eine Anschlag an der wenigstens einen Steckachse angeordnet sind. Die wenigstens eine Profilleiste und die wenigstens eine Aufnahme weisen wenigstens eine Durchgangsöffnung senkrecht zur Mantelfläche und/oder Oberfläche der wenigstens einen Profilleiste auf. Die wenigstens eine Steckachse ist durch die wenigstens eine Durchgangsöffnung der wenigstens einen Profilleiste und der wenigstens einen Aufnahme durchsteckbar ausgebildet. Die wenigstens eine Steckachse ist an der wenigstens einen Profilleiste von jeder Seite der wenigstens einen Profilleiste arretierbar. Die wenigstens eine Aufnahme ist an der wenigstens einen Profilleiste angeordnet. Die wenigstens eine Aufnahme ist an der wenigstens einen Profilleiste auf jeder Seite der wenigstens einen Durchgangsöffnung der wenigstens einen Profilleiste ausgebildet.

Unter der Angabe der Anzahl mit "wenigstens ein", ist entweder die Verwendung von genau einem Element oder zwei Elementen oder drei Elementen oder vier Elementen oder fünf Elementen oder einer anderen ganzzahligen Vielzahl an Elementen zu verstehen.

Von jeder Seite der wenigstens einen Profilleiste arretierbar heißt, dass die wenigstens eine Steckachse sowohl von der einen Seite als auch von der anderen Seite an der wenigstens einen Profilleiste durchsteckbar und arretierbar ist. Gleiches gilt sodann auch für das wenigstens eine Rad, welches mit der wenigstens einen Steckachse verbindbar ist.

Vorteilhaft weist die wenigstens eine Profilleiste wenigstens eine axiale Drehachse auf, wobei die wenigstens einen axiale Drehachse als Schnittachse der wenigstens zwei Symmetrieachsen der wenigstens einen Profilleiste in Längserstreckung der wenigstens einen Profilleiste ausgebildet ist. Das bedeutet, dass die wenigstens eine Durchgangsbohrung ebenfalls senkrecht zur der axialen Drehachse der wenigstens einen Profilleiste angeordnet ist.

Vorteilhaft kann ein Rollator aus vier erfindungsgemäßen, steckbaren Radanordnungen ausgebildet sein, wobei die entsprechenden Radanordnungen nach Patentanspruch 1 ausgebildet sind. Wenigstens zwei erfindungsgemäße, steckbare Radanordnungen sind im Wesentlichen paarweise nebeneinander angeordnet. Die so entstandenen Paare können hintereinander oder nebeneinander angeordnet sein.

Vorteilhaft können die erfindungsgemäßen, steckbaren Radanordnungen durch Profilleisten miteinander verbindbar ausgebildet sein. Die Ausbildung von Verbindungen mit beispielsweise Stahlseilen oder ähnlichen Verbindungselemente ist ebenfalls möglich.

Vorteilhaft kann wenigstens eine erfindungsgemäße, steckbare Radanordnung an wenigstens einer weiteren erfindungsgemäßen, steckbaren Radanordnung angeordnet sein. Kombinationen aus wenigstens zwei aneinander angeordneten erfindungsgemäßen, steckbaren Radanordnungen können im Wesentlichen nebeneinander oder hintereinander angeordnet sein. Die so entstandenen Kombinationen können hintereinander oder nebeneinander angeordnet sein.

Vorteilhaft kann ein Rollator aus wenigstens zwei erfindungsgemäßen, steckbaren Radanordnungen ausgebildet sein. Die wenigstens zwei erfindungsgemäßen, steckbaren Radanordnungen sind im Wesentlichen paarweise nebeneinander angeordnet. Der Rollator weist eine Kombination aus wenigstens zwei weiteren Radanordnungen auf, die bereits eine kleinere Spurbreite ausbilden, damit der Betrieb im Innenraum möglich ist. Dabei ist die Spurbreite immer als Abstand zwischen wenigstens zwei Rädern definiert. Ob die Spurbreite vergrößert oder verringert wird, ist davon abhängig auf welcher Seite der wenigstens einen Profilleiste das wenigstens eine Rad gesteckt wird. Ist das wenigstens eine Rad in der ersten Steckposition, auch Außenposition genannt, angeordnet, ist eine vergrößerte Spurbreite ausgebildet. Ist das wenigstens eine Rad in der zweiten Steckposition, auch Innenposition genannt, angeordnet, ist eine verringerte Spurbreite ausgebildet.

In einer vorteilhaften Ausführungsform beträgt bei einer steckbaren Radanordnung der Abstand zwischen Radmitte und Mitte des wenigstens einen Profilrohrs 45 mm, sodass beim Verlagern bzw. Umstecken des wenigstens einen Rads um 180° eine Verlagerung von 90 mm bezogen auf die Radmitte erfolgt. Werden auf beiden Seiten eines Rollators die Räder entsprechend in ihrer Steckposition um 180° verlagert bzw. umgesteckt, das heißt zum Beispiel von einer Innenposition in eine Außenposition überführt, so wird der Abstand der Räder um insgesamt 180 mm vergrößert. Man spricht in diesem Fall von einer Spurbreitenvergrößerung um 180 mm, was einen deutlich stabileren und sicheren Stand des Rollators ermöglicht, sodass dieser im Außenbereich eingesetzt werden kann.

Werden die Räder jeweils in eine Innenposition überführt, so wird insgesamt die Spurbreite um 180 mm verringert, was den Einsatz in engen Innenräumen deutlich erleichtert. Gleichzeitig können sich die Räder durch ihre innenliegenden Position nicht mit beispielsweise Türkanten oder Möbelkanten verhaken. Bei einer möglichen Kollision des Rollators mit Hindernissen berühren sich lediglich die Profilrohre mit der Schutzleiste, wodurch der Zusammenstoß abgefedert und abgeleitet wird. Dies erhöht zusätzlich die Sicherheit des Rollators in Innenräumen.

Vorteilhaft ist das wenigstens eine Rad an einem freien Ende der wenigstens einen Profilleiste anordnenbar bzw. verbindbar. Dabei ist das wenigstens eine Rad vorteilhaft in beide Laufrichtungen ebenfalls drehbar. So kann die Radanordnung mit dem wenigstens einen Rad vorwärts und rückwärts bewegt werden. Das Rad bildet einen Freilauf aus.

Das wenigstens eine Rad ist an einem freien Ende der wenigstens einen Steckachse anordnenbar bzw. verbindbar. Ist das wenigstens eine Rad mit der wenigstens einen Steckachse verbunden, so sind vorteilhaft das wenigstens eine Rad und die wenigstens eine Steckachse drehbar miteinander verbunden, sodass keine Drehbewegung von einer Komponenten auf die andere, das heißt von dem Rad auf die Steckachse und umgekehrt, übertragbar ist.

Vorteilhaft ist das wenigstens eine Rad über wenigstens ein Lager mit der wenigstens einen Steckachse verbindbar. Das wenigstens eine Lager kann als Kugellager ausgebildet sein. Durch die Möglichkeit der steckbaren Anbringung der wenigstens einen Steckachse mit oder ohne des wenigstens einen Rads an die wenigstens eine Profilleiste ist die wenigstens eine Steckachse mit oder ohne dem wenigstens eine Rad leicht und schnell an die wenigstens eine Profilleiste montierbar. So kann sie zum Beispiel schnell und einfach gewechselt oder umgesteckt werden. Die wenigstens eine Arretiereinheit hält die wenigstens eine Steckachse nach der steckbaren Anbringung in ihrer Position an der wenigstens einen Profilleiste.

Vorteilhaft ist der Innendurchmesser des wenigstens einen Lagers nahezu gleich zu dem Außendurchmesser der Steckachse ausgebildet. Es ist entsprechend eine Passung ausgebildet, die entweder als Spielpassung oder als Presspassung ausgebildet sein kann. Ob eine Spiel- oder eine Presspassung vorliegt, ist von dem Verhältnis des Innendurchmessers des Lagers und dem Außendurchmesser der Steckachse abhängig, wobei die genaueren Zusammenhänge einem Fachmann bekannt sind und diese hier aus diesem Grund nicht genauer ausgeführt werden.

Vorteilhaft kann der wenigstens eine Anschlag als Distanzbuchse oder Distanzhülse ausgebildet sein.

Vorteilhaft ist mit wenigstens einem Klemmring das wenigstens eine Rad auf der wenigstens einen Steckachse zwischen dem wenigstens einen Anschlag, der beispielhaft als Distanzbuchse ausgebildet sein kann, und dem wenigstens einen Klemmring an den Auflageflächen der beispielsweise wenigstens zwei Lager unter Berücksichtigung eines Längsspiels montierbar ausgebildet.

Vorteilhaft kann der wenigstens eine Klemmring als Sechskantmutter ausgebildet sein.

Vorteilhaft ist am äußeren Ende der wenigstens einen Steckachse der dem wenigstens einen Rad zugewandten Seite der wenigstens einen Steckachse ein Außengewinde ausgebildet. Vorteilhaft weist dieses Außengewinde einen zu dem Innengewinde des wenigstens einen Klemmrings passenden Durchmesser auf. Damit ist eine sichere Montage des wenigstens einen Rads auf der wenigstens einen Steckachse möglich.

Vorteilhaft kann das Längsspiel des wenigstens einen Rads auf der wenigstens einen Steckachse, das zwischen dem wenigstens einen Anschlag und dem wenigstens einen Klemmring platziert ist, durch die Platzierung des wenigstens einen Klemmrings auf dem Außengewinde der wenigstens Steckachse einstellbar ausgebildet sein.

Vorteilhaft kann die wenigstens eine Profilleiste kreisförmig oder oval oder elliptisch oder polygonförmig oder sternförmig, vorteilhafter kreisförmig oder oval oder elliptisch oder polygonförmig ausgebildet sein.

Vorteilhaft kann die Profilleiste aus Kunststoff oder auch faserverstärktem Kunststoff oder Metall oder Carbon gefertigt sein.

Vorteilhaft kann die wenigstens eine Profilleiste wenigstens eine Führungsrille an wenigstens einer Seite der wenigstens einen Profilleiste aufweisen. Vorteilhaft kann die wenigstens eine Führungsrille als Aufschiebeführung ausgebildet sein. Mit der wenigstens einen Führungsrille kann beispielsweise wenigstens eine Schützhülle oder ein Schutzprofil montiert werden.

Vorteilhaft kann das wenigstens eine Rad in seiner Größe variabel ausgebildet sein. Sind mehrere Räder vorhanden, dann sind wenigstens nebeneinanderliegende Räder in ihrer Größe im Wesentlichen gleich ausgebildet.

Vorteilhaft kann das wenigstens eine Rad in seinem Profil variabel ausgebildet sein. Sind mehrere Räder vorhanden, dann sind wenigstens nebeneinanderliegende Räder ihr Profil betreffend im Wesentlichen gleich ausgebildet.

In einer weiteren vorteilhaften Ausgestaltung der Erfindung kann die wenigstens eine Steckachse kreisförmig oder oval oder elliptisch oder polygonförmig oder sternförmig, vorteilhafter kreisförmig oder oval oder elliptisch oder polygonförmig ausgebildet sein.

Vorteilhaft ist die wenigstens eine Steckachse im Radbereich kreisförmig ausgebildet. Damit kann eine einfache Montage der Lager sowie das Aufbringen eines Außengewindes ermöglicht werden.

Weiterhin ist vorteilhaft die Durchgangsöffnung mit Hilfe einer Form gestanzt oder geschnitten, beispielsweise mit einem Laser- oder Wasserstrahlschneidegerät oder gebohrt und/oder anschließend entgratet ausgebildet.

Vorteilhaft kann die wenigstens eine Durchgangsöffnung kreisförmig oder oval oder elliptisch oder polygonförmig oder sternförmig ausgebildet sein.

Vorteilhaft sind die Formen der wenigstens einen Steckachse und der wenigstens einen Durchgangsöffnung gleich ausgebildet.

Vorteilhaft weisen die Abmessungen der Querschnitte der wenigstens einen Steckachse und der wenigstens einen Durchgangöffnung einen ähnlichen Wert auf. Dabei entspricht der Querschnitt der wenigstens einen Steckachse der Fläche, die senkrecht zur Längsrichtung der Steckachse angeordnet ist.

Noch vorteilhafter bilden die Abmessungen der Querschnitte der wenigstens einen Steckachse und der wenigstens einen Durchgangsöffnung eine Spielpassung aus. Das bedeutet, dass der Durchmesser der wenigstens einen Durchgangsöffnung so groß ist, dass die wenigstens eine Steckachse hindurchgesteckt werden kann. Dabei entspricht der Außendurchmesser der wenigstens einen Steckachse im Wesentlichen dem Durchmesser der wenigstens einen Durchgangsöffnung, wobei im Wesentlichen bedeutet, dass zwischen diesen eine Passtoleranz vorgesehen ist, so wie sie für die Dimensionierung von Spielpassungen fachüblich ist. In diesem Fall kann dies je nach Größe des Außendurchmessers der Steckachse wenige Hundertstelmillimeter bis Zehntelmillimeter betragen.

Vorteilhaft kann die wenigstens eine Arretiereinheit in Form von wenigstens einem Federknopf und/oder wenigstens einem Druckknopf oder wenigstens einem Haltebügel oder wenigstens einer Kombination aus einer Feder und einem Stift oder weiteren dem Fachmann bekannten federbasierten oder auf federähnlichen Aufbauten basierende Vorrichtungen ausgebildet sein.

Vorteilhaft kann die wenigstens eine Aufnahme polygonförmig oder kreisförmig oder kreisringförmig oder elliptisch oder oval ausgebildet sein. Dabei liegt der Mittelpunkt der Durchgangsöffnung auf wenigstens einer Symmetrieachse der wenigstens einen Aufnahme, vorteilhafter auf der Symmetrieachse der wenigstens einen Aufnahme in Längserstreckung, noch vorteilhafter auf beiden Symmetrieachsen der wenigstens einen Aufnahme. Für die schmutzgeschützte Platzierung des wenigstens einen Anschlags an der wenigstens einen Aufnahme kann die wenigstens eine Aufnahme wenigstens eine Senkung aufweisen.

Diese wenigstens eine Senkung bzw. wenigstens eine Senklochbohrung kann in ihrer Form analog zur beschrieben Durchgangsöffnung nur vorteilhaft größer skaliert ausgebildet sein. Die wenigstens eine Senkung kann in ihrer Tiefe gerade oder konisch zulaufen.

In der Mantelfläche oder Bodenfläche der wenigstens einen Senkung der wenigstens einen Aufnahme können beispielsweise Befestigungsrillen oder ähnliche Aussparungen, die zur formschlüssigen Verbindung von Bauteilen nutzbar sind, ausgebildet sein. Analoges kann auf der Oberfläche der wenigstens einen Aufnahme oder bei Abwesenheit der wenigstens einen Senkung in der Mantelfläche der wenigstens einen Durchgangsöffnung ausgebildet sein. Weiterhin ist die wenigstens eine Aufnahme auf der Profilleiste zugewandten Seite der wenigstens einen Aufnahme in ihrer Form gleich der Mantelfläche der wenigstens einen Profilleiste auf der die wenigstens eine Aufnahme montierbar ist.

Es ist sicherzustellen, dass die wenigstens eine Steckachse durch die wenigstens eine Durchgangsöffnung und die wenigstens eine Senkung bzw. wenigstens eine Senklochbohrung steckbar ist. Zudem dürfen keine Probleme bedingt durch die gewählten Formen der wenigstens einen Durchgangsöffnung und der wenigstens einen Steckachse entstehen, wie sie beispielsweise bei der Montage des wenigstens einen Rads auf der wenigstens einen Steckachse auftreten könnten.

Vorteilhaft ist die wenigstens eine Aufnahme beispielsweise an die wenigstens eine Profilleiste geschraubt oder geschweißt oder geschmolzen oder geklebt oder gesteckt.

Vorteilhaft weist die wenigstens eine Aufnahme ein Gegenstück zu der wenigstens einen Arretiereinheit auf, womit die wenigstens eine Steckachse mit der wenigstens einen Arretiereinheit und der wenigstens einen Aufnahme arretierbar ist.

Vorteilhaft ist die wenigstens eine Arretiereinheit durch einen Bediener lösbar ausgebildet. Das Lösen der Arretiereinheit kann vorteilhaft beispielsweise durch die Integration einer Löseeinheit durchführbar sein. Diese Löseeinheit kann beispielsweise als Federknopf und/oder Druckknopf ausgebildet sein. Weiterhin kann die Löseeinheit beispielsweise auf der Radseite angeordnet sein.

Vorteilhaft ist der wenigstens eine Anschlag, welcher auf der Steckachse angeordnet ist, fest oder vorteilhafter demontierbar mit der Steckachse verbindbar. Ist der wenigstens eine Anschlag, beispielsweise in Form einer Distanzbuchse, demontierbar mit der wenigstens einen Steckachse verbunden, also beispielsweise angeschraubt oder gesteckt oder verpresst, kann bei beispielsweise Versagen oder Verschleiß des wenigstens einen Anschlags, dieser jederzeit ohne großen Aufwand oder große Kosten ausgetauscht werden. Anolog ist bei Versagen oder Verschleiß die wenigstens eine Steckachse jederzeit ohne großen Aufwand oder große Kosten austauschbar.

Vorteilhaft ist der wenigstens eine Anschlag, beispielsweise in Form einer Distanzbuchse, durch einen Bediener lösbar ausgebildet. Das Lösen des Anschlags kann vorteilhaft beispielsweise durch die Integration einer Löseeinheit durchführbar sein. Diese Löseeinheit kann beispielsweise als Federknopf und/oder Druckknopf ausgebildet sein. Weiterhin kann die Löseeinheit beispielsweise auf der Radseite angeordnet sein.

Vorteilhaft ist der Anschlag in seinem Querschnitt zumindest teilweise polygonförmig oder elliptisch oder kreisförmig oder sternförmig ausgebildet.

Vorteilhaft ist der wenigstens eine Anschlag, beispielhaft in Form einer Distanzbuchse, der auf der dem Rad abgewandten Seite der wenigstens einen Profilleiste angeordnet ist, in der wenigstens einen Senkung bzw. wenigstens einen Senklochbohrung der wenigstens einen Aufnahme formschlüssig platzierbar.

In einer vorteilhaften Ausgestaltung der Erfindung nach Patentanspruch 2 ist vorgesehen, dass wenigstens eine Aufnahme an der wenigstens einen Profilleiste auf jeder Seite der wenigstens einen Durchgangsöffnung der wenigstens einen Profilleiste angeordnet ist. Dabei bilden die wenigstens eine Arretiereinheit und die wenigstens eine Aufnahme eine Arretierung in einer möglichen weiteren Ausführungsform aus und/oder sind als Arretiermodul ausgebildet. Damit ist es möglich bei Beschädigung der wenigstens einen Aufnahme, diese als Einzelteil ohne größeren Aufwand auszutauschen.

Durch die Ausbildung der Arretierung und/oder des Arretiermoduls durch die wenigstens eine Arretiereinheit und die wenigstens eine Aufnahme wird eine besonders gute Handhabbarkeit erreicht, wobei auch die Austauschbarkeit einzelner Komponenten erleichtert wird. Ist die Arretiereinheit beispielsweise verschlissen, kann diese ausgetauscht werden, ohne die gesamt Arretierung und/oder das gesamte Arretiermodul zu ersetzen. Das ist nachhaltig und spart Kosten.

In einer vorteilhaften Ausgestaltung der Erfindung nach Patentanspruch 3 ist vorgesehen, dass das wenigstens eine Rad mit der wenigstens einen Steckachse von jeder Seite der Profilleiste in die jeweils eine Durchgangsöffnung der wenigstens einen Profilleiste und/oder der wenigstens einen Aufnahme einsteckbar ist, wodurch das wenigstens eine Rad in eine erste Steckposition und eine zweite Steckposition verbringbar ist. Dabei ist eine Veränderung der Spurbreite in einer weiteren alternativen Ausgesatlung der Erfindung durch ein Umstecken des wenigstens einen Rads von einer ersten Steckposition in eine zweite Steckposition und/oder umgekehrt bewirkbar.

Die zweite Steckposition befindet sich von der wenigstens einen Profilleiste aus gesehen auf der entsprechend gegenüberliegenden Seite. Das heißt, dass das wenigstens Rad mit der wenigstens einen Steckachse von jeder Seite der wenigstens einen Profilleiste, also beidseitig, in die wenigstens eine Durchgangsöffnung der wenigstens einen Profilleiste und/oder der wenigstens einen Aufnahme steckbar ist. Dadurch ist die Position des wenigstens einen Rads an der wenigstens einen Profilleiste einfach und schnell verlagerbar. Die erste Steckposition kann auch als Außenposition und die zweite Steckposition als Innenposition bezeichnet werden. So ist das wenigstens eine Rad entsprechend innen oder außen anordnenbar.

Der Wechsel der Steckposition ist durch die hier beschriebene Radanordnung schnell und einfach möglich. Durch die Möglichkeit des Umsteckens des wenigstens einen Rads ist es möglich, die Spurbreite - beispielsweise eines Rollators - zu vergrößern oder zu verringern. Dabei ist die Spurbreite immer als Abstand zwischen wenigstens zwei Rädern definiert. Ob die Spurbreite vergrößert oder verringert wird, ist davon abhängig auf welcher Seite der wenigstens einen Profilleiste das wenigstens eine Rad gesteckt wird. Ist das wenigstens eine Rad in der ersten Steckposition, auch Außenposition genannt, angeordnet, ist eine vergrößerte Spurbreite ausgebildet. Ist das wenigstens eine Rad in der zweiten Steckposition, auch Innenposition genannt, angeordnet, ist eine verringerte Spurbreite ausgebildet.

Vorteilhaft beträgt bei einer steckbaren Radanordnung der Abstand zwischen Radmitte und Mitte des wenigstens einen Profilrohrs 45 mm, sodass beim Verlagern bzw. Umstecken des wenigstens einen Rads um 180° eine Verlagerung von 90 mm bezogen auf die Radmitte erfolgt. Werden auf beiden Seiten eines Rollators die Räder entsprechend in ihrer Steckposition um 180° verlagert bzw. umgesteckt, das heißt zum Beispiel von einer Innenposition in eine Außenposition überführt, so wird der Abstand der Räder um insgesamt 180 mm vergrößert. Man spricht in diesem Fall von einer Spurbreitenvergrößerung um 180 mm, was einen deutlich stabileren und sicheren Stand des Rollators ermöglicht, sodass dieser im Außenbereich eingesetzt werden kann.

Werden die Räder jeweils in eine Innenposition überführt, so wird insgesamt die Spurbreite um 180 mm verringert, was den Einsatz in engen Innenräumen deutlich erleichtert. Gleichzeitig können sich die Räder durch ihre innenliegenden Position nicht mit beispielsweise Türkanten oder Möbelkanten verhaken. Bei einer möglichen Kollision des Rollators mit Hindernissen berühren sich lediglich die Profilrohre mit der Schutzleiste, wodurch der Zusammenstoß abgefedert und abgeleitet wird. Dies erhöht zusätzlich die Sicherheit des Rollators in Innenräumen.

Vorteilhaft ist in einer weiteren möglichen Ausführung der Erfindung vorgesehen, dass eine Veränderung der Spurbreite durch ein Umstecken des wenigstens einen Rads von einer ersten Steckposition in eine zweite Steckposition und/oder umgekehrt bewirkbar ist.

Wird eine erfindungsgemäße steckbare Radanordung nach Patentanspruch 1 verwendet, kann wie bereits beschrieben ein Umstecken von einer ersten Steckposition, auch Außenposition genannt, in eine zweite Steckposition, auch Innenposition genannt, leicht erfolgen.

Vorteilhaft beträgt bei einer steckbaren Radanordnung der Abstand zwischen Radmitte und Mitte des wenigstens einen Profilrohrs in etwa 45 mm, sodass beim Verlagern bzw. Umstecken des wenigstens einen Rads um 180° eine Verlagerung von in etwa 90 mm bezogen auf die Radmitte erfolgt. Werden auf beiden Seiten eines Rollators die Räder entsprechend in ihrer Steckposition um 180° verlagert bzw. umgesteckt, das heißt zum Beispiel von einer Innenposition in eine Außenposition überführt, so wird der Abstand der Räder um insgesamt in etwa 180 mm vergrößert. Man spricht in diesem Fall von einer Spurbreitenvergrößerung um in etwa 180 mm, was einen deutlich stabileren und sicheren Stand des Rollators ermöglicht, sodass dieser im Außenbereich eingesetzt werden kann.

Werden die Räder jeweils in eine Innenposition überführt, so wird insgesamt die Spurbreite um in etwa 180 mm verringert, was den Einsatz in engen Innenräumen deutlich erleichtert. Gleichzeitig können sich die Räder durch ihre innenliegenden Position nicht mit beispielsweise Türkanten oder Möbelkanten verhaken. Bei einer möglichen Kollision des Rollators mit Hindernissen berühren sich lediglich die Profilrohre mit der Schutzleiste, wodurch der Zusammenstoß abgefedert und abgeleitet wird. Dies erhöht zusätzlich die Sicherheit des Rollators in Innenräumen.

In einer vorteilhaften Ausgestaltung der Erfindung nach Patentanspruch 4 ist vorgesehen, dass die wenigstens eine Arretierung und/oder das wenigstens eine Arretiermodul, welches an der Steckachse angeordnet ist, selbstarretierend ausgebildet ist. Unter selbstarretierend ist hier zu verstehen, dass die Arretierung und/oder das Arretiermodul ohne die Einwirkung eines Bedieners von einem gelösten in einen gesperrten oder arretierten Zustand überführbar ist.

Vorteilhaft ist die wenigstens eine Arretierung und/oder das wenigstens eine Arretiermodul durch einen Bediener lösbar ausgebildet. Das Lösen der wenigstens einen Arretierung und/oder des wenigstens einen Arretiermoduls kann vorteilhaft beispielsweise durch die Integration eines Federknopf und/oder Druckknopfes durchführbar sein. Dieser Federknopf und/oder Druckknopf kann beispielsweise auf der Radseite angeordnet sein.

In einer vorteilhaften Ausgestaltung der Erfindung nach Patentanspruch 5 ist vorgesehen, dass die wenigstens eine Arretiereinheit auf der dem wenigstens einen Rad abgewandten Seite der wenigstens einen Steckachse angeordnet ist. Die wenigstens eine Arretiereinheit befindet sich entsprechend an einem freien Ende der wenigstens einen Steckachse. Damit ist die wenigstens eine Steckachse mit der Seite an der die wenigstens eine Arretiereinheit angeordnet ist durch die wenigstens eine Durchgangsöffnung der jeweils wenigstens einen Profilleiste und der wenigstens einen Aufnahme durchsteckbar. Dabei kann in Abhängigkeit der Länge der wenigstens einen Steckachse und der Positionierung der wenigstens einen Arretiereinheit auf der wenigstens einen Steckachse wenigstens eine Arretierung und/oder wenigstens ein Arretiermodul bestehend aus der wenigstens einen Arretiereinheit und der wenigstens einen Aufnahme so ausgebildet sein, dass die wenigstens eine Steckachse seitlich nicht über die wenigstens eine Profilleiste und die wenigstens eine Aufnahme übersteht.

In einer vorteilhaften Ausgestaltung der Erfindung nach Patentanspruch 6 ist vorgesehen, dass der wenigstens eine Anschlag auf der dem wenigstens einen Rad zugewandten Seite der wenigstens einen Steckachse angeordnet ist, wobei der wenigstens eine Anschlag das wenigstens eine Rad von der wenigstens einen Aufnahme beabstandet.

Vorteilhaft ist damit das Rad stets so montierbar, dass ein freier Lauf des wenigstens einen Rads gewährleistet werden kann. Das bedeutet, dass durch die Beabstandung sichergestellt wird, dass die Bewegung des wenigstens einen Rads nicht durch andere Komponenten der Radanordnung beeinträchtigt wird. Davon ist eine mögliche Bremseinrichtung ausgenommen.

In einer vorteilhaften Ausgestaltung der Erfindung nach Patentanspruch 7 ist vorgesehen, dass der wenigstens eine Anschlag derart ausgebildet ist, dass die wenigstens eine Steckachse in jeder Steckposition seitlich der Profilleiste und Aufnahme nicht übersteht. Je nach Länge der wenigstens einen Steckachse und der Positionierung des wenigstens einen Anschlags auf der wenigstens einen Steckachse kann diese so ausgebildet sein, dass die wenigstens eine Steckachse seitlich nicht über die wenigstens eine Profilleiste und die wenigstens eine Aufnahme übersteht.

Vorteilhaft ist der wenigstens eine Anschlag so angeordnet, dass die wenigstens eine Arretiereinheit mit der wenigstens einen Aufnahme so verbindbar ist, dass die wenigstens eine Arretiereinheit nicht sichtbar ist.

In einer vorteilhaften Ausgestaltung der Erfindung nach Patentanspruch 8 ist vorgesehen, dass die wenigstens eine Aufnahme wenigstens eine der Form der wenigstens einen Arretiereinheit entsprechende umlaufende Ringnut in der Mantelfläche der wenigstens einen Durchgangsöffnung aufweist. Das bedeutet, dass die wenigstens eine Arretierung und/oder das wenigstens eine Arretiermodul bestehend aus der wenigstens einen Aufnahme und der wenigstens einen Arretiereinheit durch die Platzierung des wenigstens einen Verschlussmechanismus innerhalb der wenigstens einen Aufnahme nicht sichtbar und/oder schmutzgeschützt ausgebildet ist.

In einer vorteilhaften Ausgestaltung der Erfindung nach Patentanspruch 9 ist vorgesehen, dass die wenigstens eine Aufnahme je Seite der wenigstens einen Profilleiste an der wenigstens einen Profilleiste am äußeren Ende der wenigstens einen Profilleiste bündig und/oder symmetrisch und/oder konzentrisch zur wenigstens einen Durchgangsöffnung angeordnet ist.

Vorteilhaft ist die wenigstens eine Aufnahme je Seite der wenigstens einen Profilleiste am äußeren Ende der wenigstens einen Profilleiste bündig angeordnet. Damit ist die Platzierung der wenigstens einen Aufnahme an der wenigstens einen Profilleiste erleichtert.

Vorteilhaft ist die wenigstens eine Aufnahme je Seite der wenigstens einen Profilleiste an der wenigstens einen Profilleiste symmetrisch angeordnet. Damit kann die Aufnahme bei Beschädigung leicht ausgetauscht werden und es genügt je wenigstens einer Profilleiste eine Art der wenigstens einen Aufnahme zu fertigen. Es können also Kosten eingespart werden, da die Form der wenigstens einen Aufnahme nicht anhand der Platzierungsseite der wenigstens einen Aufnahme unterschieden wird.

Vorteilhaft ist die wenigstens eine Aufnahme je Seite der wenigstens einen Profilleiste an der wenigstens einen Profilleiste konzentrisch zur wenigstens einen Durchgangsöffnung angeordnet. Damit kann einfach sichergestellt werden, dass die wenigstens eine Steckachse durch die wenigstens eine Aufnahme und die wenigstens eine Profilleiste durchsteckbar ist.

In einer vorteilhaften Ausgestaltung der Erfindung nach Patentanspruch 10 ist vorgesehen, dass die wenigstens eine Profilleiste als Profilrohr oder als mit einem Gitter gefüllte Stange ausgebildet ist.

Vorteilhaft ist das wenigstens eine Profilrohr und/oder die wenigstens eine mit einem Gitter gefüllte Stange kreisförmig oder oval oder elliptisch oder polygonförmig oder sternförmig, vorteilhafter kreisförmig oder oval oder elliptisch oder polygonförmig ausgebildet.

Vorteilhaft weist das Gitter, mit dem die wenigstens eine mit einem Gitter gefüllte Stange ausgebildet ist, einen polygonförmigen oder elliptischen oder kreisförmigen oder sternförmigen Querschnitt auf. Wiederum vorteilhaft weist das Gitter, mit dem die wenigstens eine mit einem Gitter gefüllte Stange ausgebildet ist, eine dreidimensionale Lattice-Struktur auf, wie beispielsweise eine Weaire-Phelan- oder Honeycomp-Struktur. Dies ist nicht einschränkend zu verstehen, da auch weitere dem Fachmann bekannten, dreidimensionalen Lattice-Strukturen verwendbar sind.

Es wird nach Patentanspruch 11 außerdem ein Rollator mit wenigstens einer steckbaren Radanordnung nach Patentanspruch 1 vorgesehen, wobei durch wenigstens eine steckbare Radanordnung eine Spurbreitenveränderung des Rollators bewirkbar ist. Vorteilhaft sind wenigstens zwei steckbare Radanordnungen vorgesehen, die gegenüberliegend angeordnet sind. Die Räder der gegenüberliegenden steckbaren Radanordnungen definieren hierbei die Spurbreite des Rollators, wobei die Spurbreite immer als Abstand zwischen wenigstens zwei Rädern definiert ist.

Wird nunmehr die Steckposition von wenigstens einem Rad verändert, so wird gleichzeitig eine Veränderung der Spurweite bewirkt. Das wenigstens eine Rad wird durch Veränderung der Steckposition entweder von innen nach außen oder umgekehrt verlagert. Bei einer symmetrischen Steckpositionsveränderung von wenigstens zwei Rädern sind folglich wenigstens die beiden Räder entweder außen oder innen bezogen auf den Rollator angeordnet.

Rollatoren, die für einen Einsatz draußen im Freien vorgesehen sind, weisen für einen stabilen und sicheren Halt eine breite Spurbreite auf. Demgegenüber weisen Rollatoren, die für den Innenbereich vorgesehen sind, eine schmalere Spurbreite auf, um komfortabel in Innenräumen bewegt werden zu können. Hierbei sind die Räder vorteilhaft nach innen verlagert, sodass eine schmalere Spurbreite eingestellt ist. Beim Einsatz für den Außenbereich sind die Räder vorteilhaft nach außen verlagert, um so eine größere Spurbreite bereitzustellen.

In einer vorteilhaften Ausführungsform beträgt bei einer steckbaren Radanordnung der Abstand zwischen Radmitte und Mitte des wenigstens einen Profilrohrs 45 mm, sodass beim Verlagern bzw. Umstecken des wenigstens einen Rads um 180° eine Verlagerung von 90 mm bezogen auf die Radmitte erfolgt. Werden auf beiden Seiten eines Rollators die Räder entsprechend in ihrer Steckposition um 180° verlagert bzw. umgesteckt, das heißt zum Beispiel von einer Innenposition in eine Außenposition überführt, so wird der Abstand der Räder um insgesamt 180 mm vergrößert. Man spricht in diesem Fall von einer Spurbreitenvergrößerung um 180 mm, was einen deutlich stabileren und sicheren Stand des Rollators ermöglicht, sodass dieser im Außenbereich eingesetzt werden kann.

Werden die Räder jeweils in eine Innenposition überführt, so wird insgesamt die Spurbreite um 180 mm verringert, was den Einsatz in engen Innenräumen deutlich erleichtert. Gleichzeitig können sich die Räder durch ihre innenliegenden Position nicht mit beispielsweise Türkanten oder Möbelkanten verhaken. Bei einer möglichen Kollision des Rollators mit Hindernissen berühren sich lediglich die Profilrohre mit der Schutzleiste, wodurch der Zusammenstoß abgefedert und abgeleitet wird. Dies erhöht zusätzlich die Sicherheit des Rollators in Innenräumen.

In einer vorteilhaften Ausgestaltung der Erfindung nach Patentanspruch 12 ist für einen Rollator nach Patentanspruch 11 vorgesehen, dass wenigstens eine Bremseinheit an einer wenigstens einen Haltemanschette angeordnet ist, wobei die wenigstens eine Haltemanschette an der wenigstens einen Profilleiste angeordnet ist.

Die wenigstens eine Bremseinheit kann mehrteilig ausgebildet sein. Das wenigstens eine Rad ist durch die wenigstens eine Bremseinheit abbremsbar. Das bedeutet, dass die Rotation des wenigstens einen Rads vorteilhaft bis zum Stillstand reduzierbar ist.

Vorteilhaft ist wenigstens eine Bremseinheit an wenigstens einer Profilleiste von wenigstens zwei gegenüberliegenden erfindungsgemäßen, steckbaren Radanordnungen ausgebildet.

Vorteilhaft ist die innere Form der wenigstens einen Haltemanschette an die äußere Form der wenigstens einen Profilleiste angepasst. Damit ist die wenigstens eine Haltemanschette auf die wenigstens eine Profilleiste montierbar.

Vorteilhaft ist die wenigstens eine Bremseinheit in ihrer Längserstreckung gegenüber der wenigstens einen Haltemanschette kürzer ausgebildet.

Vorteilhaft ist die innere Form der wenigstens einen Bremseinheit an die äußere Form der wenigstens einen Haltemanschette formschlüssig ausgebildet.

Vorteilhaft ist die wenigstens eine Haltemanschette auf die wenigstens eine Profilleiste aufschiebbar ausgebildet. Damit ist eine möglichst einfache Montage gewährleistbar.

Vorteilhaft kann die wenigstens eine Bremseinheit auf die wenigstens eine Haltemanschette aufgeschoben werden. Damit kann die wenigstens eine Bremseinheit einfach montiert werden. Vorteilhafter ist die wenigstens einen Bremseinheit auf der wenigstens einen Haltemanschette werkzeuglos montierbar.

Vorteilhaft weist die wenigstens eine Profilleiste wenigstens eine weitere Durchgangsöffnung auf, wobei wenigstens ein Haltestift durch die wenigstens eine weitere Durchgangsöffnung durchsteckbar ist. Der wenigstens eine Haltestift ist als Halterung der wenigstens einen Haltemanschette auf der wenigstens einen Profilleiste ausgebildet.

Vorteilhaft kann der wenigstens eine Haltestift kreisförmig oder oval oder elliptisch oder polygonförmig oder sternförmig ausgebildet sein.

Vorteilhaft kann der wenigsten eine Haltestift auch als wenigstens ein Haltebolzen ausgebildet sein.

In einer vorteilhaften Ausgestaltung der Erfindung nach Patentanspruch 13 ist für einen Rollator nach Patentanspruch 11 vorgesehen, dass die wenigstens eine Bremseinheit drehbar um die axiale Drehachse der wenigstens einen Profilleiste ausgebildet ist, wobei die wenigstens eine Haltemanschette als weitere Arretiereinheit ausgebildet ist.

Dabei ist die axiale Drehachse der wenigstens einen Profilleiste als Schnittachse der wenigstens zwei Symmetrieachsen der wenigstens einen Profilleiste in Längserstreckung der wenigstens einen Profilleiste ausgebildet.

Vorteilhaft ist die äußere Form der wenigstens einen Haltemanschette kreisförmig oder oval oder elliptisch oder polygonförmig oder sternförmig ausgebildet.

Vorteilhaft ist die äußere Form der wenigstens einen Haltemanschette als Kombination der vorangehenden Formen ausgebildet. Somit weist die wenigstens eine Haltemanschette wenigstens eine erste und wenigstens eine zweite Verschiebeposition für die wenigstens eine Bremseinheit auf. Dabei wird die wenigstens eine erste Verschiebeposition als Drehbereich und die wenigstens eine zweite Verschiebeposition als Arretierbereich bezeichnet. Durch das Ausnutzen einer formschlüssigen Verbindung zwischen der wenigstens einen Bremseinheit und der wenigstens einen Haltemanschette im wenigstens einen Arretierbereich und ein freies Rotieren im wenigstens einen Drehbereich ist ein werkzeugloser Drehvorgang möglich.

Vorteilhaft ist eine Drehung der wenigstens einen Bremseinheit um die axiale Drehachse der wenigstens einen Profilleiste möglich, wenn die wenigstens eine erfindungsgemäße steckbare Radverbindung nach Patentanspruch 1 ausgesteckt wird.

Die Funktion der wenigstens einen Haltemanschette kann in einer weiteren vorteilhaften Ausgestaltung der Erfindung auch durch wenigstens einen Haltebügel realisiert sein, der anstelle der wenigstens einen Haltemanschette zum Einsatz kommt.

Vorteilhaft kann die wenigstens eine weitere Arretiereinheit mehrteilig ausgebildet sein. Beispielsweise besteht die wenigstens eine weitere Arretiereinheit aus wenigstens einem ersten Kreisring, welcher fest mit der Profilleiste verbindbar ist, wenigstens einem frei rotierbaren zweiten Kreisring, welcher vorteilhaft in der Längserstreckung des wenigstens einen ersten Kreisrings kürzer ausgebildet ist. Dabei weist der wenigstens eine erste Kreisring wenigstens eine Rille auf, wobei der wenigstens eine zweite Kreisring über diese wenigstens eine Rille mit dem wenigstens einen ersten Kreisring verbindbar ausgebildet ist. Dabei ist durch den wenigstens einen ersten und den wenigstens einen zweiten Kreisring wenigstens ein Drehemelent ausbildbar. Die Rotation des wenigstens einen zweiten Kreisrings ist an wenigstens zwei sich gegenüberliegenden Position stoppbar. Dafür weisen der wenigstens eine erste Kreisring und/oder der wenigstens eine zweite Kreisring eine Durchgangsöffnung auf, in welche wenigstens eine Arretiervorrichtung steckbar ist. Diese wenigstens eine Arretiervorrichtung kann beispielsweise als Federknopf oder Arretierzylinder ausgebildet sein.

Vorteilhaft ist das wenigstens eine Drehelement durch einen Bediener leicht drehbar. Das bedeutet, dass im entriegelten Zustand der Arretiervorrichtung der wenigstens eine zweite Kreisring leicht gegenüber dem wenigstens einen ersten Kreisring verdrehbar ist. Dabei liegt der entriegelte Zustand der Arretiervorrichtung vor, wenn das wenigstens eine Rad aus der ersten Steckposition oder zweiten Steckposition entnommen wird und nicht länger in die wenigstens eine Profilleiste und/oder wenigstens eine Aufnahme eingesteckt ist.

Vorteilhaft beträgt der maximale Winkel, um welchen der wenigstens eine erste Kreisring gegenüber dem wenigstens einen zweiten Kreisring verdrehbar ist, 180°. Bei einer Drehung der Bremseinheit ist zu beachten, dass die wenigstens eine Hülle und/oder die wenigstens eine Seele nicht beschädigt werden.

Vorteilhaft ist an dem wenigstens einen zweiten Kreisring wenigstens ein Haltebügel angeordnet, welcher das Entriegeln der wenigstens einen Arretiervorrichtung durch den Benutzer erleichtert. Dabei kann der wenigstens eine Haltebügel die Drehung des wenigstens einen zweiten Kreisrings gegenüber dem wenigstens einen ersten Kreisring erleichtern.

Vorteilhaft ist der erste Kreisring als Haltemanschette ausgebildet. Damit ist es möglich einem Bauteil durch Funktionsintegration mehrere Merkmale zuzuweisen und es müssen insgesamt weniger Einzelbauteile gefertigt werden, wodurch ein Austausch bei Versagen oder Verschleiß erleichtert wird.

Vorteilhaft ist der zweite Kreisring als Bremshülse ausgebildet. Damit ist es möglich einem Bauteil durch Funktionsintegration mehrere Merkmale zuzuweisen und es müssen insgesamt weniger Einzelbauteile gefertigt werden, wodurch ein Austausch bei Versagen oder Verschleiß erleichtert wird.

In einer vorteilhaften Ausgestaltung der Erfindung nach Patentanspruch 14 ist für einen Rollator nach Patentanspruch 11 vorgesehen, dass die wenigstens eine Bremseinheit wenigstens eine Bremshülse mit mindestens einer daran angeordneten Bremsbacke aufweist.

Beim Bremsvorgang wird die wenigstens eine Bremshülse mit der mindestens einen Bremsbacke in Richtung Rad verschoben, bis die Bremsbacke auf das Rad trifft und radial dagegen drückt. Hierdurch wird eine Reibungskraft zwischen Rad und Bremsbacke bewirkt, die wiederum zu einem Abbremsen des Rads führt. Das Wirkprinzip entspricht dem einer Stempelbremse.

Die wenigstens eine Bremsbacke erstreckt sich vorteilhaft in einer senkrecht zur Mantelfläche und/oder Oberfläche der wenigstens einen Profilleiste stehenden Ebene von der wenigstens einen Profilleiste nach außen weg. Sie ist gleichzeitig an der wenigstens einen Bremshülse verschiebbar gelagert. So kann die Bremsbacke entsprechend der Steckposition des Rads verschoben werden, sodass sich Bremsbacke und Rad auf der gleichen Seite des Profilrohrs befinden.

In einer vorteilhaften Ausgestaltung der Erfindung nach Patentanspruch 15 ist für einen Rollator nach Patentanspruch 11 vorgesehen, dass die wenigstens eine Bremshülse mittels Zugkraftbeaufschlagung über wenigstens eine Bremsleitung verschiebbar ist, wobei die wenigstens eine Bremsleitung als ein Bowdenzug ausgebildet ist und wenigstens eine Seele sowie wenigstens eine Hülle umfasst.

Die wenigstens eine Seele befindet sich hierbei wenigstens zum Teil innerhalb der wenigstens einen Hülle. Das äußere Ende der wenigstens einen Seele ist an dem äußeren Ende der wenigstens einen Bremseinheit befestigt. Die Befestigung erfolgt hierbei über wenigstens eine Aufnahme an der wenigstens einen Haltemanschette, in welche das äußere Ende der wenigstens einen Seele aufgenommen ist. Die wenigstens eine Hülle steht in Wirkverbindung mit der wenigstens einen Bremshülse.

Vorteilhaft kann das äußere Ende der wenigstens einen Seele in und/oder an wenigstens einem Bremsnippel befestigt werden. Vorteilhaft ist der wenigstens Bremsnippel um die axiale Drehachse der wenigstens einen Profilleiste drehbar mit der wenigstens einen Haltemanschette verbunden. Dabei ist die axiale Drehachse der wenigstens einen Profilleiste als Schnittachse der wenigstens zwei Symmetrieachsen der wenigstens einen Profilleiste in Längserstreckung der wenigstens einen Profilleiste ausgebildet.

Vorteilhaft folgt der wenigstens eine Bremsnippel der Drehung der wenigstens einen Bremseinheit um die axiale Drehachse der wenigstens einen Profilleiste. Damit kann eine möglichst einfache Bedienung bei der Drehung der wenigstens einen Bremseinheit um die axiale Drehachse der wenigstens einen Profilleiste ermöglicht werden.

Vorteilhaft ist der wenigstens eine Bremsnippel als Ring mit Bremsnippel ausgebildet. Damit ist eine leichte Montage des wenigstens einen Ring mit Bremsnippel an die wenigstens eine Haltemanschette möglich, die eine bedienerfreundliche Drehung begünstigt.

Vorteilhaft ist für die steckbaren Radanordnung vorgesehen, dass zwischen dem äußeren Ende der wenigstens einen Seele, wo sie an der wenigstens einen Bremseinheit befestigt ist, und der wenigstens einen Bremsbacke zusätzlich um die wenigstens eine Seele herum wenigstens eine Spiralfeder angeordnet ist, welche eine rücktreibende Federkraft auf die wenigstens eine Bremsbacke bewirkt, sodass nach einer Zugkraftbeaufschlagung über die wenigstens eine Bremsleitung, durch welche die wenigstens eine Bremsbacke auf das wenigstens eine Rad gedrückt wird, diese wieder vom wenigstens einen Rad weg in ihre ursprüngliche Ausgangsposition verbracht wird. Dadurch wird ein sicheres Lösen der Bremse nach einem Bremsvorgang gewährleistet.

Vorteilhaft weist die wenigstens eine Profilleiste wenigstens eine Halteeinheit auf, welche die wenigstens eine Seele mit der wenigstens einen Profilleiste, insbesondere dem Ring mit Bremsnippel, verbindet. Dabei kann die wenigstens eine Halteeinheit auf die wenigstens eine Profilleiste aufgeschoben oder aufgeklipst oder formschlüssig befestigt oder geschraubt oder geklebt oder gesteckt werden. Damit kann sichergestellt werden, dass die wenigstens eine Seele nicht beispielsweise an Hindernissen hängen bleibt und somit ein Schaden am Rollator entstehen kann.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine perspektivische Ansicht eines Rollators mit erfindungsgemäßen steckbaren Radanordnungen;
- Fig. 2: eine perspektivische Ansicht der steckbaren Radanordnung;
- Fig. 3: eine perspektivische Ansicht einer steckbaren Radanordnung mit entriegeltem Arretiermodul;
- Fig. 4: eine perspektivische Ansicht einer steckbaren Radanordnung mit entriegeltem Schwenkmechanismus und entriegeltem Arretiermodul;
- Fig. 5: perspektivische Ansicht einer steckbaren Radanordnung in einer zweiten Steckposition;
- Fig. 6: Draufsicht auf eine steckbare Radanordnung mit Bremseinheit;
- Fig. 7: Draufsicht auf eine steckbare Radanordnung mit Fokus auf das Arretiermodul;

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

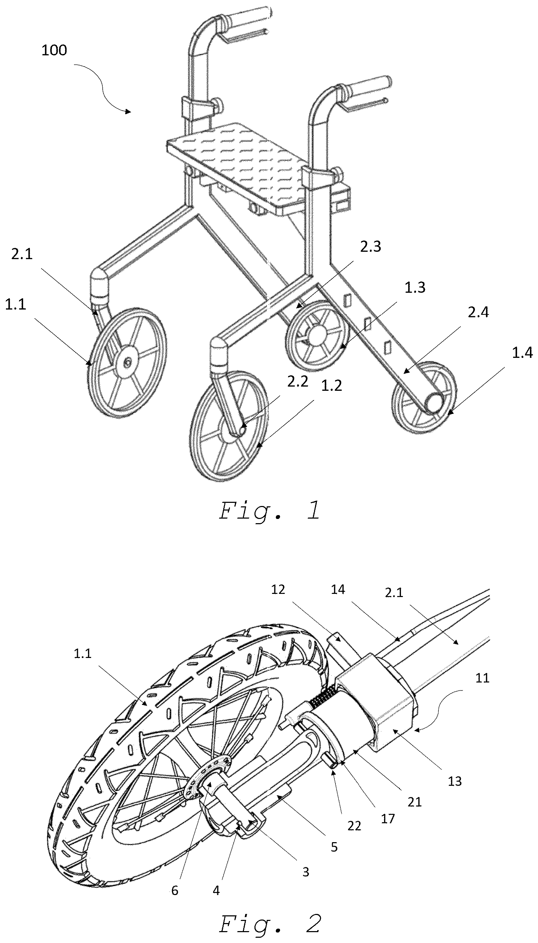

Fig. 1 zeigt eine perspektivische Ansicht eines Rollators 100 mit erfindungsgemäßen steckbaren Radanordnungen. Dabei ist erkennbar, dass der Rollator 100 vier Profilleisten (2.1; 2.2; 2.3; 2.4) und vier Räder (1.1; 1.2; 1.3; 1.4) aufweist. Die im Folgenden beschriebene Bremseinheit ist hier nicht dargestellt. In der gezeigten vorteilhaften Ausführung sind die Hinterräder 1.3 und 1.4 in Form einer steckbaren Radanordnung ausgebildet.

Fig. 2 zeigt eine perspektivische Ansicht der steckbaren Radanordnung in einer vorteilhaften Ausführung der Erfindung mit Bremseinheit 11, wobei diese geöffnet ist und somit kein Bremsvorgang darstellt wird. Dabei befindet sich die am Ende der Radseite der Steckachse 3 befindliche Löseeinheit (hier nicht dargestellt) in einer Sperrposition. Die Radanordnung weist eine Profilleiste 2.1 auf, die hier als Profilrohr gezeigt wird.

Es ist weiterhin gezeigt, dass die Steckachse 3 durch die Durchgangsöffnung (hier nicht markiert), die in dieser vorteilhaften Ausführungsform der Erfindung an einem äußeren Ende der Profilleiste 2.1 ausgebildet ist, durchsteckbar ist und das Rad 1.1 an der Profilleiste 2.1 befestigt.

Zudem ist die Aufnahme 5 der Profilleiste 2.1 angeordnet und weist ebenfalls eine Durchgangsöffnung (hier nicht markiert) auf, durch die in dieser vorteilhaften Ausführungsform der Erfindung die Steckachse 3 durchgesteckt ist. Die Steckachse 3 ragt in dieser beispielhaften Ausführung nicht über die Aufnahme 5 hinaus, sondern ist in dieser versteckt ausgebildet.

Weiterhin ist eine zusätzliche Senkung, die in auf zwei gegenüberliegenden Seiten der Aufnahme 5 beispielsweise gebohrt wird und einen größeren Durchmesser als die Durchgangsöffnung (hier nicht markiert) aufweist, gezeigt. Dabei ist die Senkung konzentrisch zu der Durchgangsöffnung (hier nicht markiert) angeordnet. Die Mantelfläche der Senkung verläuft in der dargestellten Ausführungsform der Erfindung zylindrisch, ausgehend von der Oberfläche der jeweiligen Seite der Aufnahme 5 in Richtung der Profilleiste 2.1. In der gezeigten Ausführungsform der Erfindung ist die Aufnahme 5 so an der Profilleiste 2.1 angeordnet, dass diese bündig oder nahezu bündig an einem äußeren Ende der Profilleiste 2.1 montiert ist.

Am äußeren Ende der Steckachse 3 auf der dem Rad 1.1 abgewandten Seite der Steckachse 3 ist die Arretiereinheit 4 gezeigt, die in dieser vorteilhaften Ausführung als Federknopf oder Druckknopf ausgebildet ist.

In der Senkung der Aufnahme 5, die auf der Rad 1.1 zugewandten Seite der Profilleiste 2.1 angeordnet ist, ist die Distanzbuchse 6 formschlüssig platziert. Diese beabstandet das Rad 1.1 von der Aufnahme 5, sodass ein freier Lauf des Rads 1.1 ermöglicht wird.

Das Rad 1.1 ist in dieser vorteilhaften Ausgestaltung der Erfindung über das Lager 9.1 und das Lager 9.2 mit der Steckachse 3 verbunden. Dabei ist der Innendurchmesser des Lagers 9.1 und des Lagers 9.2 nahezu gleich dem Außendurchmesser der Steckachse 3. Es ist entsprechend eine Passung ausgebildet, die entweder als Spielpassung oder als Presspassung ausgebildet ist. Ob eine Spiel- oder eine Presspassung vorliegt, ist von dem Verhältnis des jeweiligen Innendurchmessers des Lagers 9.1 oder des Lagers 9.2 und dem Außendurchmesser der Steckachse 3 abhängig, wobei die genaueren Zusammenhänge einem Fachmann bekannt sind und diese hier aus diesem Grund nicht genauer ausgeführt werden.

Mit Hilfe einer Sechskantmutter (hier nicht gezeigt) wird das Rad 1.1 auf der Steckachse 3 zwischen der Distanzbuchse 6 und der Sechskantmutter (hier nicht gezeigt) an den Auflageflächen des Lagers 9.1 und des Lagers 9.2 unter Berücksichtigung des Längsspiels des Rads 1.1 gegenüber der Distanzbuchse 6 und/oder der Aufnahme 5 und/oder der Profilleiste 2.1 montiert.

Um eine gute Befestigung zu gewährleisten, ist am äußeren Ende der Steckachse 3 der Rad 1.1 zugewandten Seite der Steckachse 3 ein Außengewinde (hier nicht dargestellt) ausgebildet, das einen zu dem Innengewinde der Sechskantmutter (hier nicht dargestellt) passenden Durchmesser aufweist. Mit Hilfe der Sechskantmutter (hier nicht dargestellt) und dem Außengewinde (hier nicht dargestellt) ist es möglich das Längsspiel des Rads 1.1 auf der Steckachse 3 gegenüber der Distanzbuchse 6 und/oder der Aufnahme 5 und/oder der Profilleiste 2.1 einzustellen.

Die Radanordnung weist weiterhin eine Bremseinheit 11 auf, mit welcher das Rad 1.1 bei Bedarf gebremst werden kann. Die gezeigte Bremseinheit 11 ist aus einer Bremshülse 13 mit daran angeordneter Bremsbacke 12 mehrteilig ausgebildet. Dabei ist die Bremsbacke 12 fluchtend zur Profilleiste 2.1, insbesondere der Haltemanschette 21, oberhalb des Rads 1.1 angeordnet und wird von der Bremshülse 13 gehalten. Weiterhin ist die Bremseinheit 11 auf einer Haltemanschette 21 aufgesteckt, die an der Profilleiste 2.1 befestigt ist. Zudem befindet sich die Bremshülse 13 in einer ersten Verschiebeposition.

Weiterhin ist die Bremseinheit 11 drehbar um die axiale Drehachse (nicht dargestellt) der Profilleiste 2.1 ausgebildet, wobei die Haltemanschette 21 in Kombination mit der Bremshülse 13 als Schwenkmechanismus mit Arretierfunktion ausgebildet ist, wobei ein Arretieren durch einen Formschluss zwischen der Haltemanschette 21 und der Bremshülse 13 ermöglicht wird. Dabei ist die axiale Drehachse (hier nicht dargestellt) als Schnittachse der wenigstens zwei Symmetrieachsen der wenigstens einen Profilleiste 2.1 in Längserstreckung der wenigstens einen Profilleiste 2.1 ausgebildet.

Diese Haltemanschette 21 weist eine mehrteilige äußere Form auf. In der gezeigten vorteilhaften Ausführung ist durch eine Kreisform mit anschließendem Übergang in eine Polygonform ausgebildet. Auf diese Haltemanschette 21, deren Innenform der Außenform der Profilleiste 2.1 folgt und welche auf die Profilleiste 2.1 aufgeschoben wird und durch einen Haltestift 22 in Position gehalten wird, wird die Bremshülse 13, welche vorteilhaft in ihrer Längserstreckung gegenüber der Haltemanschette 21 kürzer ausgebildet ist, aufgeschoben. Dabei ist die Innenform der Bremshülse viereckig ausgebildet und ist leicht um den Bereich der Haltemanschette 21, der kreisförmig ist, hinüberschiebbar. Es sind weiterhin eine Hülle 14, die die Seele (hier nicht markiert) bis zur Bremsbacke 12 ummantelt, sowie eine Spiralfeder (hier nicht markiert), die die Seele (hier nicht markiert) ab der Bremsbacke 12 bis hin zum Ring mit Bremsnippel 17 umschließt, dargestellt. Der Ring mit Bremsnippel 17 besteht dabei aus einer Aufnahme für die Seele (hier nicht dargestellt) und einem Kreisring, der am unteren Ende der Haltemanschette 21 drehbar angebracht ist. Damit kann der Ring mit Bremsnippel 17 der Drehbewegung der Bremshülse 13 folgen.

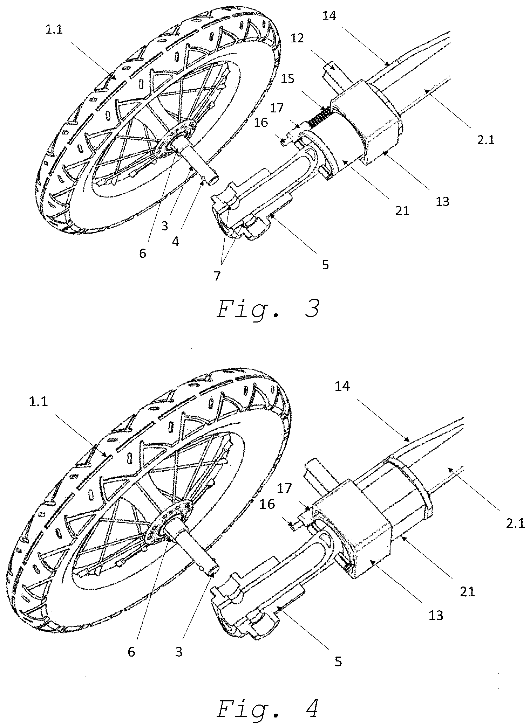

In Fig. 3 wird eine perspektivische Ansicht einer steckbaren Radanordnung mit entriegelter Arretierung und/oder entriegeltem Arretiermodul mit Bremseinheit gezeigt, wobei diese geöffnet ist und somit kein Bremsvorgang darstellt wird. Dabei befindet sich die Steckachse 3 bereits außerhalb der Durchgangsöffnung 7 und ist noch nicht in die zweite Steckposition des Rads (hier nicht dargestellt), die gegenüber der ersten Steckposition liegt, überführt. Die Profilleiste 2.1 und die Arretiereinheit 4 sind hier analog zu Fig. 2 als Profilrohr und als Federknopf oder Druckknopf ausgebildet. Die Aufnahme 5 sowie die Distanzbuchse 6 sind ebenfalls, wie bereits in Fig. 2 erläutert, an der Profilleiste 2.1 beziehungsweise der Steckachse 3 angeordnet. Analoges gilt für die Bremseinheit (hier nicht markiert), die hier gezeigte Seele 16, den Ring mit Bremsnippel 17 und die Spiralfeder 15. Durch das Herausnehmen der Steckachse 3 im Rahmen des Umsteckvorgangs von einer ersten Steckposition in eine zweite Steckposition ist die Durchgangsöffnung 7 hier gut erkennbar.

In Fig. 4 ist eine perspektivische Ansicht einer steckbaren Radanordnung mit entriegelter Arretierung und/oder entriegeltem Arretiermodul und entriegelter Bremshülse 13, die entlang der Haltemanschette 21 verschoben ist und in dieser Position eine Verdrehung bzw. Schwenkung der Bremseinheit ermöglicht, dargestellt, wobei die Bremseinheit geschlossen ist und somit ein Bremsvorgang darstellt wird. Dabei ist die steckbare Radanordnung nahezu gleich zu der in Fig. 3 dargestellten Ausführungsform ausgebildet. Allerdings ist hier die Bremshülse 13 in eine zweite Verschiebeposition überführt worden. Dies kann nur erreicht werden, wenn die Arretierung und/oder das Arretiermodul entriegelt ist und das Rad 1.1 mitsamt der Steckachse 3 von der Profilleiste 2.1 und der Aufnahme 5 entfernt wird. Weiterhin kann der polygonförmige Abschnitt der Haltemanschette 21 gut erkannt werden.

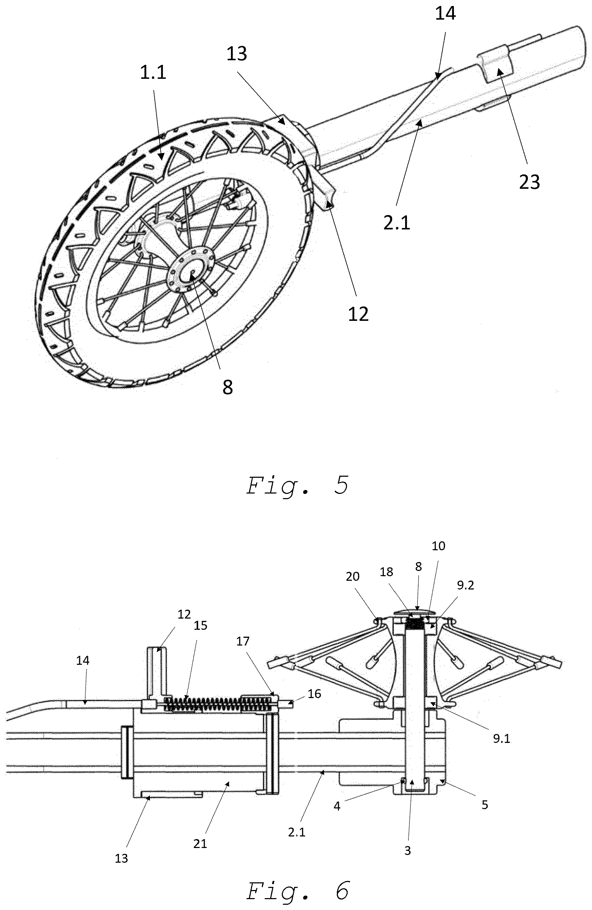

In Fig. 5 ist eine perspektivische Ansicht der steckbaren Radanordnung in einer zweiten Steckposition dargestellt. Dabei sind die Löseeinheit 8, die in dieser vorteilhaften Ausführungsform als Federknopf oder Druckknopf ausgeführt ist, das Rad 1.1, der Bremsbacken 12 sowie die Profilleiste 2.1 und die Hülle 14 der Seele (hier nicht markiert) dargestellt. Weiterhin ist die Bremshülse 13, die in ihre erste Verschiebeposition überführt worden ist, angedeutet. Es ist außerdem eine Halteeinheit 23 der Hülle 14 erkennbar, die in dieser vorteilhaften Ausführungsform als Klammer ausgebildet ist. Die Innenform der Halteeinheit 23 entspricht dabei der Außenform der Profilleiste 2.1 und sie wird in dieser vorteilhaften auf die Profilleiste 2.1 aufgeklipst oder aufgeschoben.

Über die Fig. 2 bis Fig. 5 ist der Umsteckvorgang von einer ersten Steckposition, wie in Fig. 2 gezeigt, über einen entriegelten Zustand der Arretierung und/oder des Arretiermoduls und einem entriegeltem Zustand der Bremshülse 13 durch Verschiebung der Bremshülse 13 entlang der Haltemanschette 21 bis hin zu einer Montage der Radanordnung in einer zweiten Steckposition veranschaulicht. Damit kann beispielsweise bei einem Rollator (nicht dargestellt) oder Kinderwagen (nicht dargestellt) von einer ersten Steckposition des Rads, die eine große Spurbreite, welche für Sicherheit im Gelände sorgt, ausbildet, zu einer zweiten Steckposition des Rads mit kleinerer Spurbreite, wodurch beispielsweise Türen mit einer Breite von weniger als 80 cm passierbar sind und welche sich entsprechend für den Einsatz in Innenräumen eignet, gewechselt werden.

Fig. 6 zeigt eine Draufsicht auf eine steckbare Radanordnung mit Bremseinheit (hier nicht markiert). Dabei ist der Aufbau der Steckverbindung gut erkennbar. Dafür wird die Steckachse 3 durch das Rad (hier nur durch die Radnabe 20 angedeutet) sowie Aufnahme 5, die auf der Profilleiste 2.1 platziert ist, und die Profilleiste 2.1 durchgesteckt. In dieser vorteilhaften Ausführung weist die Erfindung je eine Senkung pro Seite der Aufnahme 5 konzentrisch zur Durchgangsöffnung (hier nicht markiert) auf. Dadurch ist es möglich die Distanzbuchse 6 formschlüssig an der Aufnahme 5 zu platzieren. Außerdem wird die Arretiereinheit 4 gezeigt, die in dieser vorteilhaften Ausführung als Federknopf oder Druckknopf ausgebildet ist.

Es ist weiterhin erkennbar, dass zwischen dem Außendurchmesser der Steckachse 3 und der Durchgangsöffnung (hier nicht markiert) der Aufnahme 5 sowie der Profilleiste 2.1 jeweils eine Passung ausgebildet ist.

Weiterhin sind die Lager 9.1 und 9.2, die auf der Steckachse 3 und in der Radnabe 20 platziert sind erkennbar. Die Löseeinheit 8 ist hier als Federknopf oder Druckknopf ausgebildet. Zudem ist die Kombination aus der Sechskantmutter 10 und dem Außengewinde 18, die zur Einstellung des Längsspiels des Rads (hier nur durch die Radnabe 20 angedeutet) und der Aufnahme 5 genutzt werden, dargestellt. Zudem ist die Hülle 14 in den Bremsbacken 12 eingesteckt dargestellt. Es sind ebenfalls Senkungen in dem Bremsbacken 12 und dem Ring mit Bremsnippel 17 gezeigt, die eine Halterung für die Spiralfeder 15 darstellen.

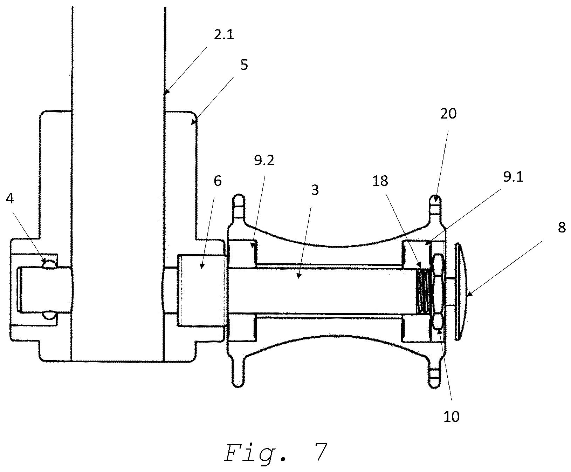

Fig. 7 zeigt eine Draufsicht auf eine steckbare Radanordnung mit Fokus auf die Arretierung und/oder das Arretiermodul. Dabei wird der Aufbau der Steckverbindung nahezu analog zu Fig. 5 dargestellt. Die Lager 9.1 bzw. 9.2, die das Rad (hier nur durch die Radnabe 20 angedeutet) auf der Steckachse 3 lagern, sind hier gut zu erkennen. Zudem ist in dieser vorteilhaften Ausführung die Löseeinheit 8 als Federknopf oder Druckknopf dargestellt, mit welchem die Arretierung und/oder das Arretiermodul in einen entriegelten Zustand überführt werden kann. Außerdem sind die in Fig. 5 beschriebene Sechskantmutter 10 sowie das Außengewinde 18, das am äußeren Ende der Steckachse 3 auf der dem Rad (hier nur durch die Radnabe 20 angedeutet) zugewandten Seite der Steckachse 3 ausgebildet ist, hier deutlich erkennbar. Weiterhin ist die Distanzbuchse 6, die das Rad (hier nur durch die Radnabe 20 angedeutet) von der Aufnahme 5 und entsprechend der Profilleiste 2.1 beabstandet, dargestellt.

Obwohl die Erfindung im Detail durch die vorteilhaften Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

### Bezugszeichenliste

- 1.1, 1.2, 1.3, 1.4: Rad
- 2.1, 2.2, 2.3, 2.4: Profilleiste
- 3: Steckachse
- 4: Arretiereinheit
- 5: Aufnahme
- 6: Distanzbuchse
- 7: Durchgangsöffnung
- 8: Löseeinheit
- 9.1, 9.2: Lager
- 10: Sechskantmutter
- 11: Bremseinheit
- 12: Bremsbacke
- 13: Bremshülse
- 14: Hülle
- 15: Spiralfeder
- 16: Seele
- 17: Ring mit Bremsnippel
- 18: Außengewinde

- 20: Radnabe
- 21: Haltemanschette
- 22: Haltestift
- 23: Halteeinheit

- 100: Rollator

## Patentansprüche

1. Steckbare Radanordnung aufweisend wenigstens ein Rad (1.1; 1.2; 1.3; 1.4), wenigstens eine Profilleiste (2.1; 2.2; 2.3; 2.4), wenigstens eine Steckachse (3), wenigstens eine Arretiereinheit (4), wenigstens eine Aufnahme (5), wobei das wenigstens eine Rad (1.1; 1.2; 1.3; 1.4) mit der wenigstens einen Steckachse (3) verbindbar ausgebildet ist, wobei die wenigstens eine Arretiereinheit (4) an der wenigstens einen Steckachse (3) angeordnet ist, wobei die wenigstens eine Profilleiste (2.1; 2.2; 2.3; 2.4) und die wenigstens eine Aufnahme (5) wenigstens ein Durchgangsöffnung (7) senkrecht zur Mantelfläche und/oder Oberfläche der wenigstens einen Profilleiste (2.1; 2.2; 2.3; 2.4) aufweisen, wobei die wenigstens eine Steckachse (3) durch die wenigstens eine Durchgangsöffnung (7) der wenigstens einen Profilleiste (2.1; 2.2; 2.3; 2.4) und der wenigstens einen Aufnahme (5) durchsteckbar ausgebildet ist, wobei die wenigstens eine Steckachse (3) an der wenigstens einen Profilleiste (2.1; 2.2; 2.3; 2.4) von jeder Seite der wenigstens einen Profilleiste (2.1; 2.2; 2.3; 2.4) arretierbar ist, wobei die wenigstens eine Aufnahme (5) an der wenigstens einen Profilleiste (2.1; 2.2; 2.3; 2.4) angeordnet ist, wobei die wenigstens eine Aufnahme (5) an der wenigstens einen Profilleiste (2.1; 2.2; 2.3; 2.4) auf jeder Seite der wenigstens einen Durchgangsöffnung (7) der wenigstens einen Profilleiste (2.1; 2.2; 2.3; 2.4) ausgebildet ist, **dadurch gekennzeichnet, dass** die Radanordnung wenigstens einen Anschlag aufweist, wobei der wenigstens eine Anschlag auf der wenigstens einen Steckachse angeordnet ist.

2. Steckbare Radanordnung nach Patentanspruch 1, **dadurch gekennzeichnet, dass** die wenigstens eine Arretiereinheit (4) und die wenigstens eine Aufnahme (5) eine Arretierung ausbilden und/oder als Arretiermodul ausgebildet sind.

3. Steckbare Radanordnung nach Patentanspruch 1, **dadurch gekennzeichnet, dass** das wenigstens eine Rad (1.1; 1.2; 1.3; 1.4) mit der wenigstens einen Steckachse (3) von jeder Seite der Profilleiste (2.1; 2.2; 2.3; 2.4) in die jeweils eine Durchgangsöffnung (7) der wenigstens einen Profilleiste (2.1; 2.2; 2.3; 2.4) und der wenigstens einen Aufnahme (5) einsteckbar ist, wodurch das wenigstens eine Rad (1.1; 1.2; 1.3; 1.4) in eine erste Steckposition und eine zweite Steckposition verbringbar ist, und/oder wobei eine Veränderung der Spurbreite durch ein Umstecken des wenigstens einen Rads (1.1; 1.2; 1.3; 1.4) von einer ersten Steckposition in eine zweite Steckposition und/oder umgekehrt bewirkbar ist.

4. Steckbare Radanordnung nach Patentanspruch 1, **dadurch gekennzeichnet, dass** die wenigstens eine Arretierung und/oder das wenigstens eine Arretiermodul, welches an der Steckachse (3) angeordnet ist, selbstarretierend ausgebildet ist.

5. Steckbare Radanordnung nach Patentanspruch 1, **dadurch gekennzeichnet, dass** die wenigstens eine Arretiereinheit (4) auf der dem wenigstens einen Rad (1.1; 1.2; 1.3; 1.4) abgewandten Seite der wenigstens einen Steckachse (3) angeordnet ist.

6. Steckbare Radanordnung nach Patentanspruch 1, **dadurch gekennzeichnet, dass** der wenigstens eine Anschlag auf der dem wenigstens einen Rad (1.1; 1.2; 1.3; 1.4) zugewandten Seite der wenigstens einen Steckachse (3) angeordnet ist, wobei der wenigstens eine Anschlag das wenigstens eine Rad (1.1; 1.2; 1.3; 1.4) von der wenigstens einen Aufnahme (5) beabstandet.

7. Steckbare Radanordnung nach Patentanspruch 1 oder 5,
**dadurch gekennzeichnet, dass** der wenigstens eine Anschlag derart ausgebildet ist, dass die wenigstens eine Steckachse (3) in jeder Steckposition seitlich der Profilleiste (2.1; 2.2; 2.3; 2.4) und Aufnahme (5) nicht übersteht.

8. Steckbare Radanordnung nach Patentanspruch 1, **dadurch gekennzeichnet, dass** die wenigstens eine Aufnahme (5) wenigstens eine der Form der wenigstens einen Arretiereinheit (4) entsprechenden umlaufende Ringnut in der Mantelfläche der wenigstens einen Durchgangsöffnung (7) aufweist.

9. Steckbare Radanordnung nach Patentanspruch 1, **dadurch gekennzeichnet, dass** die wenigstens eine Aufnahme (5) an der wenigstens einen Profilleiste (2.1; 2.2; 2.3; 2.4) am äußeren Ende der wenigsten einen Profilleiste (2.1; 2.2; 2.3; 2.4) bündig und/oder symmetrisch und/oder konzentrisch zur wenigstens einen Durchgangsöffnung (7) angeordnet ist.

10. Steckbare Radanordnung nach Patentanspruch 1, **dadurch gekennzeichnet, dass** die wenigstens eine Profilleiste (2.1; 2.2; 2.3; 2.4) als Profilrohr oder als mit einem Gitter gefüllte Stange ausgebildet ist.

11. Rollator (100), aufweisend wenigstens vier Profilleisten (2.1; 2.2; 2.3; 2.4), wenigstens vier Räder (1.1; 1.2; 1.3; 1.4), mit wenigstens einer steckbaren Radanordnung nach einem der vorangehenden Patentansprüche 1 bis 10, wobei durch die wenigstens eine steckbare Radanordnung eine Spurbreitenveränderung des Rollators bewirkbar ist.

12. Rollator (100) nach Patentanspruch 11, **dadurch gekennzeichnet, dass** wenigstens eine Bremseinheit (11) an einer wenigstens einen Haltemanschette (21) angeordnet ist, wobei die wenigstens eine Haltemanschette (21) an der wenigstens einen Profilleiste (2.1; 2.2; 2.3; 2.4) angeordnet ist.

13. Rollator (100) nach Patentanspruch 11, **dadurch gekennzeichnet, dass** die wenigstens eine Bremseinheit (11) drehbar um die axiale Drehachse der wenigstens einen Profilleiste (2.1; 2.2; 2.3; 2.4) ausgebildet ist, wobei die wenigstens eine Haltemanschette (21) als weitere Arretiereinheit ausgebildet ist.

14. Rollator (100) nach Patentanspruch 11, **dadurch gekennzeichnet, dass** die wenigstens eine Bremseinheit (11) wenigstens eine Bremshülse (13) mit mindestens einer daran angeordneter Bremsbacke (12) aufweist.

15. Rollator (100) nach Patentanspruch 14, **dadurch gekennzeichnet, dass** die wenigstens eine Bremshülse (13) mittels Zugkraftbeaufschlagung über wenigstens eine Bremsleitung verschiebbar ist, wobei die wenigstens eine Bremsleitung als ein Bowdenzug ausgebildet ist und wenigstens eine Seele (16) sowie wenigstens eine Hülle (14) umfasst.

## Claims

1. Plug-in wheel assembly having at least one wheel (1.1; 1.2; 1.3; 1.4), at least one profile strip (2.1; 2.2; 2.3; 2.4), at least one thru axle (3), at least one latching unit (4), at least one mounting (5), wherein the at least one wheel (1.1; 1.2; 1.3; 1.4) is formed to be connectable with the at least one thru axle (3), wherein the at least one latching unit (4) is arranged at the at least one thru axle (3), wherein the at least one profile strip (2.1; 2.2; 2.3; 2.4) and the at least one mounting (5) have at least one passage opening (7) perpendicular to the mantle surface and/or surface of the at least one profile strip (2.1; 2.2; 2.3; 2.4), wherein the at least one thru axle (3) is designed to be able to be plugged through the at least one passage opening (7) of the at least one profile strip (2.1; 2.2; 2.3; 2.4) and the at least one mounting (5), wherein the at least one thru axle (3) is lockable to the at least one profile strip (2.1; 2.2; 2.3; 2.4) from each side of the at least one profile strip (2.1; 2.2; 2.3; 2.4), wherein the at least one mounting (5) is arranged at the at least one profile strip (2.1; 2.2; 2.3; 2.4), wherein the at least one mounting (5) at the at least one profile strip (2.1; 2.2; 2.3; 2.4) is formed at each side of the at least one passage opening (7) of the at least one profile strip (2.1; 2.2; 2.3; 2.4), **characterized in that,** the wheel assembly has at least one limit stop, wherein the at least one limit stop is arranged on the at least one thru axle.

2. Plug-in wheel assembly according to patent claim 1,
**characterized in that,** the at least one latching unit (4) and the at least one mounting (5) form a latching and/or are designed as latching module.

3. Plug-in wheel assembly according to patent claim 1,
**characterized in that,** the at least one wheel (1.1; 1.2; 1.3; 1.4) with the at least one thru axle (3) is pluggable from each side of the profile strip (2.1; 2.2; 2.3; 2.4) into the each one passage opening (7) of the at least one profile strip (2.1; 2.2; 2.3; 2.4) and the at least one mounting (5), by which the at least one wheel (1.1; 1.2; 1.3; 1.4) is transferable into a first plugged position and a second plugged position, and/or wherein a change of the track width is effectable via re-plugging of the at least one wheel (1.1; 1.2; 1.3; 1.4) is from a first plugged position to a second plugged position and/or vice versa.

4. Plug-in wheel assembly according to patent claim 1,
**characterized in that,** the at least one latching and/or the at least one latching module, which is arranged at the thru axle (3), is designed to be self-locking.

5. Plug-in wheel assembly according to patent claim 1,
**characterized in that,** the at least one latching unit (4) is arranged at the opposing side to the at least one wheel (1.1; 1.2; 1.3; 1.4) at the at least one thru axle (3).

6. Plug-in wheel assembly according to patent claim 1,
**characterized in that,** the at least one limit stop is arranged at the side facing the at least one wheel (1.1; 1.2; 1.3; 1.4) of the at least one thru axle (3), wherein the at least one limit stop spaces the at least one wheel (1.1; 1.2; 1.3; 1.4) from the at least one mounting (5).

7. Plug-in wheel assembly according to patent claims 1 or 5,
**characterized in that,** the at least one limit stop is designed in such a way that the at least one thru axle (3) does not protrude laterally to the profile strip (2.1; 2.2; 2.3; 2.4) and the mounting (5) in every plugged position.

8. Plug-in wheel assembly according to patent claim 1,
**characterized in that,** the at least one mounting (5) has at least one circumferential ring groove in the mantle surface of the at least one passage opening (7) in the form of the at least one latching unit (4).

9. Plug-in wheel assembly according to patent claim 1,
**characterized in that,** the at least one mounting (5) is arranged on the at least one profile strip (2.1; 2.2; 2.3; 2.4) at the outer end of the at least one profile strip (2.1; 2.2; 2.3; 2.4) succinctly and/or symmetrically and/or concentrically to the at least one passage opening (7).

10. Plug-in wheel assembly according to patent claim 1,
**characterized in that,** the at least one profile strip (2.1; 2.2; 2.3; 2.4) is designed as a profile tube or as a grid-filled rod.

11. Rollator (100), having at least four profile strips (2.1; 2.2; 2.3; 2.4), at least four wheels (1.1; 1.2; 1.3; 1.4), with at least one plug-in wheel assembly according to one of the previous patent claims 1 to 10, wherein with the at least one plug-in wheel assembly a change of track width of the rollator is effectable.

12. Rollator (100) according to patent claim 11,
**characterized in that,** at least one breaking unit (11) is arranged at an at least one holding sleeve (21), wherein the at least one holding sleeve (21) is arranged at the at least one profile strip (2.1; 2.2; 2.3; 2.4).

13. Rollator (100) according to patent claim 11,
**characterized in that,** the at least one breaking unit (11) is designed to be rotatable around the axial axis of rotation of the at least one profile strip (2.1; 2.2; 2.3; 2.4), wherein the at least one holding sleeve (21) is designed as additional latching unit.

14. Rollator (100) according to patent claim 11,
**characterized in that,** the at least one breaking unit (11) has at least one break sleeve (13) with at least one brake shoe (12), which is arranged thereon.

15. Rollator (100) according to patent claim 14,
**characterized in that,** the at least one brake sleeve (13) is movable by application of tensile force via at least one brake line, wherein the at least one brake line is designed as Bowden wire and comprises at least one core (16) and at least one sheath (14).

## Revendications

1. Ensemble de roues enfichables comportant au moins une roue (1.1 ; 1.2 ; 1.3 ; 1.4), au moins une baguette profilée (2.1 ; 2.2 ; 2.3 ; 2.4), au moins un axe enfichable (3), au moins une unité de blocage (4), au moins un logement (5), l'au moins une roue (1.1 ; 1.2 ; 1.3 ; 1.4) étant formée de manière à pouvoir être reliée à l'au moins un axe d'enfichage (3), l'au moins une unité d'arrêt (4) étant disposée sur l'au moins un axe d'enfichage (3), l'au moins une baguette profilée (2.1 ; 2.2 ; 2.3 ; 2.4) et l'au moins un logement (5) comportant au moins une ouverture de passage (7) perpendiculairement à la face extérieure et/ou à la surface de l'au moins une baguette profilée (2.1 ; 2.2 ; 2.3 ; 2.4), l'au moins un axe d'enfichage (3) étant formé de manière à pouvoir traverser l'au moins une ouverture de passage (7) de l'au moins une baguette profilée (2.1 ; 2.2 ; 2.3 ; 2.4) et l'au moins un logement (5), l'au moins un axe d'enfichage (3) pouvant être bloqué sur l'au moins une baguette profilée (2.1 ; 2.2 ; 2.3 ; 2.4) par chaque côté de l'au moins une baguette profilée (2.1 ; 2.2 ; 2.3 ; 2.4), l'au moins un logement (5) étant disposé sur l'au moins une baguette profilée (2.1 ; 2.2 ; 2.3 ; 2.4), l'au moins un logement (5) étant formé sur l'au moins une baguette profilée (2.1 ; 2.2 ; 2.3 ; 2.4) sur chaque côté de l'au moins une ouverture de passage (7) de l'au moins une baguette profilée (2.1 ; 2.2 ; 2.3 ; 2.4), **caractérisé en ce que** l'ensemble de roues comporte au moins une butée, l'au moins une butée étant disposée sur l'au moins un axe d'enfichage.

2. Ensemble de roues enfichables selon la revendication 1, **caractérisé en ce que** l'au moins une unité de blocage (4) et l'au moins un logement (5) forment un blocage et/ou sont formés sous la forme d'un module de blocage.

3. Ensemble de roues enfichables selon la revendication 1, **caractérisé en ce que** l'au moins une roue (1.1 ; 1.2 ; 1.3 ; 1.4) peut être enfichée avec l'au moins un axe d'enfichage (3) de chaque côté de la baguette profilée (2.1 ; 2.2 ; 2.3 ; 2.4) dans l'ouverture de passage (7) respective de l'au moins une baguette profilée (2.1 ; 2.2 ; 2.3 ; 2.4) et de l'au moins un logement (5), ce qui permet d'amener l'au moins une roue (1.1 ; 1.2 ; 1.3 ; 1.4) dans une première position d'enfichage et une deuxième position d'enfichage, et/ou une modification de la largeur de voie pouvant être entraînée par un transfert de l'au moins une roue (1.1 ; 1.2 ; 1.3 ; 1.4) depuis une première position d'enfichage dans une deuxième position d'enfichage et/ou inversement.

4. Ensemble de roues enfichables selon la revendication 1, **caractérisé en ce que** l'au moins un blocage et/ou l'au moins un module de blocage, qui est disposé sur l'axe d'enfichage (3), sont formés de manière autobloquante.

5. Ensemble de roues enfichables selon la revendication 1, **caractérisé en ce que** l'au moins une unité de blocage (4) est disposée sur le côté, opposé à l'au moins une roue (1.1 ; 1.2 ; 1.3 ; 1.4), de l'au moins un axe enfichable (3) .

6. Ensemble de roues enfichables selon la revendication 1, **caractérisé en ce que** l'au moins une butée est disposée sur le côté, tourné vers l'au moins une roue (1.1 ; 1.2 ; 1.3 ; 1.4), de l'au moins un axe d'enfichage (3), l'au moins une butée espaçant l'au moins une roue (1.1 ; 1.2 ; 1.3 ; 1.4) de l'au moins un logement (5).

7. Ensemble de roues enfichables selon la revendication 1 ou 5, **caractérisé en ce que** l'au moins une butée est formée de telle manière que l'au moins un axe d'enfichage (3) ne dépasse pas latéralement de la baguette profilée (2.1 ; 2.2 ; 2.3 ; 2.4) et du logement (5) dans chaque position d'enfichage.

8. Ensemble de roues enfichables selon la revendication 1, **caractérisé en ce que** l'au moins un logement (5) comporte au moins une rainure annulaire périphérique correspondant à la forme de l'au moins une unité de blocage (4) dans la surface extérieure de l'au moins une ouverture de passage (7).

9. Ensemble de roues enfichables selon la revendication 1, **caractérisé en ce que** l'au moins un logement (5) est disposé sur l'au moins une baguette profilée (2.1 ; 2.2 ; 2.3 ; 2.4) à fleur et/ou symétriquement et/ou concentriquement par rapport à l'au moins une ouverture de passage (7) sur l'extrémité extérieure de l'au moins une baguette profilée (2.1 ; 2.2 ; 2.3 ; 2.4).

10. Ensemble de roues enfichables selon la revendication 1, **caractérisé en ce que** l'au moins une baguette profilée (2.1 ; 2.2 ; 2.3 ; 2.4) est réalisée sous la forme d'un tube profilé ou d'une barre remplie d'une grille.

11. Déambulateur (100) comportant au moins quatre baguettes profilées (2.1 ; 2.2 ; 2.3 ; 2.4), au moins quatre roues (1.1 ; 1.2 ; 1.3 ; 1.4), avec au moins un ensemble de roues enfichables selon l'une des revendications précédentes 1 à 10, **caractérisé en ce qu'**une modification de largeur de voie du déambulateur peut être entraînée par l'au moins un ensemble de roues enfichables.

12. Déambulateur (100) selon la revendication 11, **caractérisé en ce qu'**au moins une unité de freinage (11) est disposée sur au moins un manchon de retenue (21), l'au moins un manchon de retenue (21) étant disposé sur l'au moins une baguette profilée (2.1 ; 2.2 ; 2.3 ; 2.4).

13. Déambulateur (100) selon la revendication 11, **caractérisé en ce que** l'au moins une unité de freinage (11) est formée de manière à pouvoir tourner autour de l'axe de rotation axial de l'au moins une baguette profilée (2.1 ; 2.2 ; 2.3 ; 2.4), l'au moins un manchon de retenue (21) étant formé sous la forme d'une autre unité de blocage.

14. Déambulateur (100) selon la revendication 11, **caractérisé en ce que** l'au moins une unité de freinage (11) comporte au moins une douille de freinage (13) avec au moins un segment de frein (12) disposé dessus.

15. Déambulateur (100) selon la revendication 14, **caractérisé en ce que** l'au moins une douille de freinage (13) peut être coulissée par application d'une force de traction par au moins une conduite de frein, l'au moins une conduite de frein étant formée sous la forme d'un câble Bowden et comprenant au moins un noyau (16) et au moins une gaine (14).
